# EUROPEAN PATENT SPECIFICATION

(11) **EP 1 285 785 B1**
(45) Date of publication and mention of the grant of the patent: **31.05.2006**
(21) Application number: 02100395.9
(22) Date of filing: 22.04.2002
(51) Int. Cl.: B60C 15/00, B60C 15/06

(54) **Passenger tire with chapex construction**
PKW-Reifen mit einem Wulstverstärkungskautschukprofil
Bandage pneunatique pour véhiclues de tourisme muni d'un profilé de renfort de bourrelet

(30) Priority: 01.05.2001 US 846993
(43) Date of publication of application: 26.02.2003
(73) Proprietor: THE GOODYEAR TIRE & RUBBER COMPANY, Akron, Ohio 44316-0001 (US)
(72) Inventor: Bernard, Philippe Pascal Gilles, 6600, Bastogne (BE); Espinosa, Erick Sigfried, 44321, Copley (US); Schultz, Klaus-Dieter, L-9455, Fouhren (LU)
(74) Representative: Kutsch, Bernd

(56) References cited:
- EP-A- 0 554 108
- EP-A- 1 052 117
- EP-A- 1 083 064
- US-A- 4 773 463
- US-A- 5 524 688

## Description

### Field of the Invention

The invention relates to the bead portion of a pneumatic tire, more specifically to a monoply tire having a bead portion with no apex and a locked-in bead structure when mounted on a specified rim.

### Background of the Invention

As new materials are developed, and the strength of the materials increases, more simplified constructions of pneumatic tires are possible. For example, where in the past radial ply tires were made almost exclusively using two carcass plies, in recent years, monoply carcass constructions are being developed. There are some instances, however, for example where a tire is expected to be used under rigorous conditions, such as on unpaved roads, or roads that have a tendency to have potholes, that the extra reinforcement provided by two carcass plies is still needed in the sidewall area of the tire. In the prior art, this additional reinforcement, in some cases, is provided by an extra long turn-up ply, which extends to the belt edge of a tire. Thus, even though a monoply construction is used, in a sidewall area of the tire where the turn-up overlaps with the main body of the carcass ply, two layers of carcass reinforcement are provided.

In prior art two ply constructions, it has been found that the lower sidewall area of a tire, especially in the bead area, can be made stronger using a locked tie-in bead construction, such as described in US-A- 4,922,985; 5,058,649 and especially US-A- 5,524,688, issued June 11, 1996. In the construction described, no apex is used, and the turn-ups of the two carcass plies are wrapped around each bead, and a chapex (i.e., a combined chafer and apex) locks the turn-ups against the bead and against the main body of the carcass plies.

Goodyear has used a locked tie in construction in the past on monoply tires having a short or high turn-up (i.e. a turn-up less than the section width of the tire). The document EP-A 1 052 117 discloses a tire of the same kind as previously described, which also contains a carcass with a turn-up that extends into the belt area of the tire.

It is a continuing goal in the art to simplify the construction of pneumatic tires, while at the same time increasing the tire's robustness in specific areas of the tire where it is believed that a robust construction is needed.

Such a goal is achieved with a pneumatic tire in accordance with claim 1.

### Brief Description of the Drawings

Fig. 1 illustrates a prior art tire having a monoply construction with an extended carcass ply tum-up.
Fig. 2 illustrates a monoply tire of the invention having an extended ply turn-up and a locked bead (chapex) construction.

### Detailed Description of the Invention

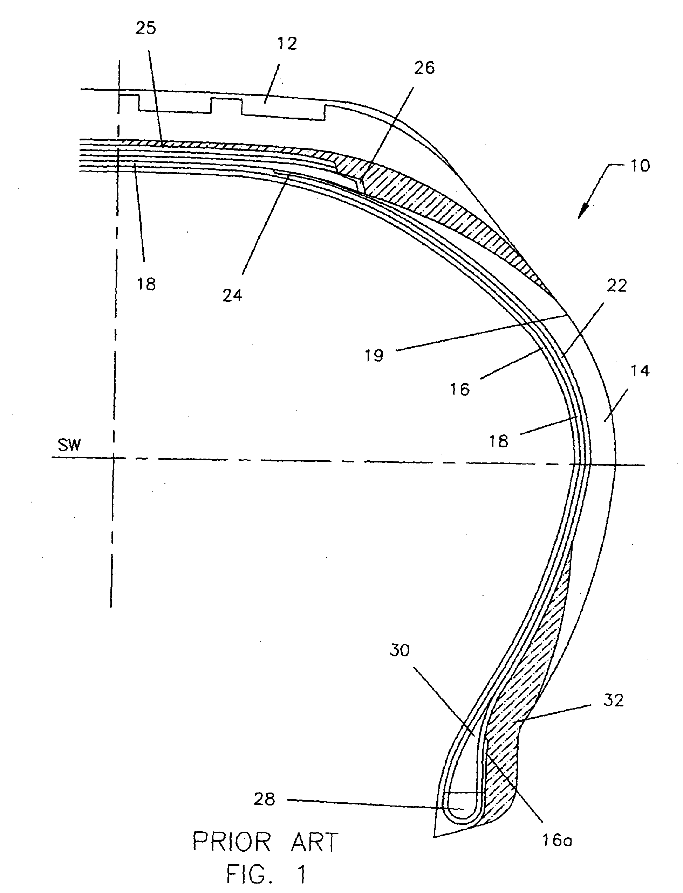

With reference now to Fig. 1, in a prior art tire known as the "envelope ply tie-in" construction, a single carcass ply 18 is wrapped around a pair of spaced apart annular beads 28, and the turn-up 22 of the carcass ply extends up into the belt area of the tire so that the end of the carcass ply 24 fits under the belt edges 26. The beads 28 may comprise a plurality of wraps of a single metallic filament. Other types of beads are known to those skilled in the art. Belt reinforcement 25 provides reinforcement for the tire radially outward of carcass ply 18 in the crown area of the tire radially inward of tread 12. The tire is also made with an apex 30 adjacent bead 28, which is disposed between carcass ply 18 and ply turn-up 22. A chafer 32 is disposed axially outwardly of turn-up 22 in the bead area of the tire, and is overlapped by sidewall 14. In the illustrated tire construction, an inner liner 16 is provided which, for ease of construction, may be extended to wrap around bead 28 and turn-up 16a. In such a construction, the rubber of the inner liner portion 16a mingles with the rubber of chafer 32 when the tire is cured.

In a tire construction, the main portion of the carcass ply refers to the portion of the carcass ply which extends between the bead cores of the tire. The carcass ply comprises reinforcing cords embedded in an elastomer, providing an eiastomer/reinforcement composite. The turn-up portion of the carcass ply is disposed radially and axially outward of the bead cores, and in the prior art tire passes over the apex, and is in contact with the main portion of the carcass ply a suitable distance. The bead portion of the tire, in addition to the bead core and the turn-up ply, comprises elastomeric materials which surround the bead and the turn-up ply.

As used herein, the terms "radial" and "radially" refer to directions going towards or away from the axis of rotation of the tire. The terms "axial" and "axially" indicate directions that are parallel to the axis of rotation of a tire.

In prior art tires, other components that may be located in the bead portion of the tire include a toe guard and a chafer strip. In most cases, the "toe guard" is a layer of reinforcing cords folded around the carcass ply and bead core on the side of the carcass ply furthest away from the bead core. The primary purpose of a toe guard is to protect the bead from damage during mounting of the tire on a rim and to protect the toe of the tire during subsequent use of the tire on the rim. A chafer may be either a tough elastomeric material that protects the bead portion from abrasion during mounting and use of the tire, or a layer of fabric extending from radially inward of the bead core to the same radial height as the edge of the turn-up. The reinforcement cords of the carcass ply 18 are oriented such that the tire is what is commonly referred to in the art as a radial ply tire.

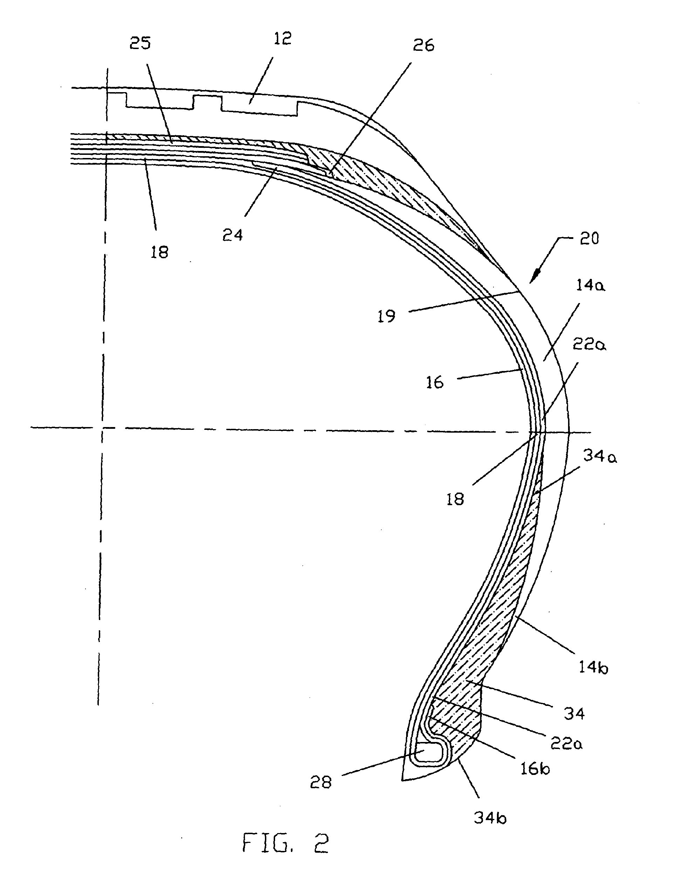

In the tire 20 of the invention, as shown in Fig. 2, a similar monoply construction is used wherein a single carcass ply 18 is wrapped around a bead 28, the difference being that turn-up 22a substantially circles around bead 28, i.e., there is no apex 30 provided between carcass ply 18 and turn-up 22a as was present in the prior art tire. Instead, a chapex 34 (chafer-apex) is provided which is shaped to fit over the top of the bead, locking turn-up ply 22a against the bead and against carcass ply 18. Chapex 34 is substantially thicker than the prior art chafer 32, and because of its leverage against bead 28, reduces the flexibility of the bead area of the tire. Chapex 34 is wedge shaped and extends 60% to 90% of the distance from the bead 28 to the position of maximal section width (SW) of the tire, and wedge shaped end 34a is overlapped by sidewall 14a such that the sidewall feathers down to a point 14b which is 50 to 80% of the distance from the section width (SW) of the tire to bead 28. Tire 20 is otherwise constructed similar to the prior art tire shown in Fig.1.

The chapex 34 is an elastomeric stiffening member comprising an elastomer having a Shore A Hardness of 60 or greater and a Young's modulus of 11,7 MPa (1700 pounds per square inch) or greater. Chapex 34 extends axially outwardly of the bead and the carcass ply turn-up and extends from a radially inner end 34b located at the radially outermost extent of the bead core 28 and turn-up 22a, to a radially outer end which is disposed radially outward of a rim flange of a rim on which the tire is designed to be mounted.

In an alternative embodiment, chapex 34 may comprise co-extruded compounds which have different properties. The properties of the compounds can be engineered to provide extra stiffness to the inner portion of the chafer, to stiffen the lower sidewall of the tire, which is believed to provide better handling in the tire.

A less stiff compound in the outer portion of the chapex may cushion the carcass ply 18 and the turn-up 22a against road hazards, and to minimize rim chafing. Turn-up 22a substantially circles around bead 28, i.e., there is no apex 30 provided between carcass ply 18 and turn-up 22a as was present in the prior art tire. Instead, a chapex 34 is provided which is shaped to fit over the top of the bead, locking turn-up ply 22a against the top of the bead. The chapex 34 conforms substantially to the shape of the bead 28.

There are fewer components, so the tire construction of the invention is easier to build. The robustness of chafer 34, and its shape wherein it surrounds bead 28, reduces the flexibility of the bead area of the tire, so that when the tire hits a pothole, for example, the tire does not pinch down on the bead. It is believed that the tire construction of the invention increases the bead durability of a tire in which it is used.

The tire construction of the invention is particularly adapted for passenger tires, i.e., for vehicles having a weight in the range of 680 to 2268kg of (1500 to 5000 pounds) . The tire is designed to handle the standard load capacity of such a vehicle. The tire may have an aspect ratio of 60 to 85, preferably 60 to 80, a tread width of 105 to 170 mm, and a diameter of 25 to 38 cm (10 to 15 inches).

In the illustrated embodiment, chapex 34 comprises a compound having a Hardness of Shore A > 60. The volume of chapex 34 comprises 75% to 95% of the total volume of the apex 30 and chafer 32 in a similarly sized prior art tire, and accordingly provides a weight savings as well as reducing the number of components in the tire. The added thickness of the chapex 34, from its location above the bead adjacent inner liner 16b, to its axially outer surface, besides locking in the turn-up, provides additional chaffing protection to the bead 28 and turn-up 22a at the bead than is seen in the prior art tire.

The stiff lower sidewall forces flexion of the sidewall closer to the shoulder 19 of tire 20, further stabilizing the lower sidewall of the tire.

In an illustrated embodiment, tires having a tread width of 105 to 170 mm and aspect ratios of 60 to 80 have been constructed. The illustrated tires have a chapex 34 which overlaps with sidewall 14 about 40% to 75% of the distance from toe 34b of chapex 34 to tip 34a of chapex 34.

## Claims

1. A pneumatic tire comprising a pair of annular beads (28), a single carcass ply (18) wrapped around said beads, a belt/breaker reinforcement (25) disposed over said carcass ply (18) in a crown area of said tire, a tread (12) disposed over said belt/breaker reinforcement (25), and a turn up (22) of the carcass ply (18) extending the full height of the sidewall (14) and having an end (24) disposed radially inward of the belt edge (26) in the crown area of said tire, wherein said turn up (22) is wrapped around the bead (28) and is contiguous with the carcass ply (18) from the bead (28) to the end (24), and wherein a chapex (34) is located radially outward of the bead (28) and said turn up (22), **characterized in that** the chapex (34) overlaps the sidewall (14) between 40% and 75% of the distance from the toe (34b) of the chapex (34) to the tip (34a) of the chapex (34).

2. The tire of claim 1, wherein the chapex (34) fills the area radially outward of the bead (28) and covers the axially outward surface of the turn-up (22) from the bead (28) to 60% to 95% of the distance from the bead (28) to the position of maximal section width (SW) of said tire.

3. The tire of claim 1, wherein said tire is a tire for a 680 to 2268 kg (1500 to 5000 pounds) vehicle and has a standard load capacity for such a vehicle.

4. The tire of claim 1, wherein said tire has an aspect ratio of 60 to 85.

5. The tire of claim 1, wherein said tire has a tread width of 105 to 170 mm.

6. The tire of claim 1, wherein said tire has a diameter of 25.4 to 38cm (10 to 15 inches)

7. The tire of claim 4, wherein the aspect ratio is 60 to 80.

8. The tire of claim 1, wherein said chapex (34) is formed from co-extruded compounds having different properties.

9. The tire of claim 8, wherein the co-extruded compound forming the outer portion of the chapex (34) is less stiff than the co-extruded compound forming the inner portion of the chapex (34).

10. The tire of claim 1, wherein the chapex (34) has a Shore Hardness of 60 or greater and a Young's modulus of 11,7 MPa or greater

## Patentansprüche

1. Ein Pneumatikreifen, der ein Paar ringförmiger Wülste (28), eine um besagte Wülste herumgeschlagene einzelne Karkassenlage (18), eine in einem Zenitbereich besagten Reifens über besagter Karkassenlage (18) angeordnete Gürtel-/Protektorverstärkung (25), eine über besagter Gürtel-/Protektorverstärkung (25) angeordnete Lauffläche (12), und einen Umschlag (22) der Karkassenlage (18), der sich über die volle Höhe der Seitenwand (14) erstreckt und wovon ein Ende (24) radial einwärts von dem Gürtelrand (26) im Zenitbereich besagten Reifens angeordnet ist, umfasst, wobei besagter Umschlag (22) um den Wulst (28) herumgeschlagen ist und von dem Wulst (28) bis zu dem Ende (24) an die Karkassenlage (18) angrenzend ist, und wobei ein Wulstschutz-Kernprofil (34) sich radial auswärts von dem Wulst (28) und besagtem Umschlag (22) befindet, **dadurch gekennzeichnet, dass** das Wulstschutz-Kernprofil (34) die Seitenwand (14) um zwischen 40% und 75% des Abstandes von der Zehe (34b) des Wulstschutz-Kernprofils (34) zur Spitze (34a) des Wulstschutz-Kernprofils (34) überlappt.

2. Der Reifen von Anspruch 1, wobei das Wulstschutz-Kernprofil (34) den Bereich radial auswärts von dem Wulst (28) füllt und die axial nach außen gerichtete Oberfläche des Umschlags (22) von dem Wulst (28) zu 60% bis 95% des Abstandes von dem Wulst (28) zu der Position der maximalen Querschnittsbreite (SW) besagten Reifens bedeckt.

3. Der Reifen von Anspruch 1, wobei besagter Reifen ein Reifen für ein Fahrzeug von 680 bis 2268 kg (1500 bis 5000 engl. Pfund) ist und eine Normbelastbarkeit für ein solches Fahrzeug hat.

4. Der Reifen von Anspruch 1, wobei besagter Reifen ein Querschnittsverhältnis von 60 bis 85 hat.

5. Der Reifen von Anspruch 1, wobei besagter Reifen eine Laufflächenbreite von 105 bis 170 mm hat.

6. Der Reifen von Anspruch 1, wobei besagter Reifen einen Durchmesser von 25,4 bis 38 cm (10 bis 15 Zoll) hat.

7. Der Reifen von Anspruch 4, wobei das Querschnittsverhältnis 60 bis 80 beträgt.

8. Der Reifen von Anspruch 1, wobei besagtes Wulstschutz-Kernprofil (34) aus co-extrudierten Verbindungen mit verschiedenen Eigenschaften geformt ist.

9. Der Reifen von Anspruch 8, wobei die co-extrudierte Verbindung, die den äußeren Teil des Wulstschutz-Kernprofils (34) bildet, weniger steif ist als die co-extrudierte Verbindung, die den inneren Teil des Wulstschutz-Kernprofils (34) bildet.

10. Der Reifen von Anspruch 1, wobei das Wulstschutz-Kernprofil (34) eine Shore-Härte von 60 oder höher und einen Youngschen Modul von 11,7 MPa oder höher hat.

## Revendications

1. Bandage pneumatique comprenant une paire de talons annulaires (28), un pli de carcasse unique (18) entourant lesdits talons, un renforcement de ceinture/nappe de sommet (25) disposé par-dessus ledit pli de carcasse (18) dans une zone de sommet dudit bandage pneumatique, une bande de roulement (12) disposée par-dessus ledit renforcement de ceinture/nappe de sommet (25) et un relevé de pli (22) du pli de carcasse (18) s'étendant sur toute la hauteur du flanc (14) et possédant une extrémité (24) disposée à l'intérieur du bord de ceinture (26), en direction radiale, dans la zone de sommet dudit bandage pneumatique, ledit relevé de pli (22) entourant le talon (28) et s'étendant en position contiguë avec le pli de carcasse (18) depuis le talon (28) jusqu'à l'extrémité (24), une combinaison bandelette-talon/bourrage sur tringle (34) étant disposée à l'extérieur du talon (28) et dudit relevé de pli (22), en direction radiale, **caractérisé en ce que** la combinaison bandelette-talon/bourrage sur tringle (34) chevauche le flanc (14) à concurrence d'une valeur entre 40 % et 75 % de la distance s'étendant entre le bout (34b) de la combinaison bandelette-talon/bourrage sur tringle (34) et le bout (34a) de la combinaison bandelette-talon/bourrage sur tringle (34).

2. Bandage pneumatique selon la revendication 1, dans lequel la combinaison bandelette-talon/bourrage sur tringle (34) remplit la zone disposée à l'extérieur du talon (28), en direction radiale, et recouvre la surface externe du relevé de pli (22), en direction axiale, à partir du talon (28) jusqu'à une valeur représentant de 60 % à 95 % de la distance s'étendant entre le talon (28) et la position correspondant à la largeur de boudin maximale (SW) dudit bandage pneumatique.

3. Bandage pneumatique selon la revendication 1, dans lequel ledit bandage pneumatique est un bandage pneumatique pour un véhicule de 680 à 2268 kg (de 1500 à 5000 livres) et possède une capacité de charge standard pour un tel véhicule.

4. Bandage pneumatique selon la revendication 1, dans lequel ledit bandage pneumatique possède un rapport nominal d'aspect de 60 à 85.

5. Bandage pneumatique selon la revendication 1, dans lequel ledit bandage pneumatique possède une largeur de bande de roulement de 105 à 170 mm.

6. Bandage pneumatique selon la revendication 1, dans lequel ledit bandage pneumatique possède un diamètre de 25,4 à 38 cm (de 10 à 15 pouces).

7. Bandage pneumatique selon la revendication 4, dans lequel le rapport nominal d'aspect s'élève de 60 à 80.

8. Bandage pneumatique selon la revendication 1, dans lequel on obtient ladite combinaison bandelette-talon/bourrage sur tringle (34) à partir de composés coextrudés possédant des propriétés différentes.

9. Bandage pneumatique selon la revendication 8, dans lequel le composé coextrudé formant la portion externe de la combinaison bandelette-talon/bourrage sur tringle (34) est moins rigide que le composé coextrudé formant la portion interne de la combinaison bandelette-talon/bourrage sur tringle (34).

10. Bandage pneumatique selon la revendication 1, dans lequel la combinaison bandelette-talon/bourrage sur tringle (34) possède une dureté Shore de 60 ou plus et un module de Young de 11,7 MPa ou plus.
